(19) Europäisches Patentamt
European Patent Office
Office européen des brevets

(11) EP 2 015 113 A1

(12) **EUROPEAN PATENT APPLICATION**
published in accordance with Art. 153(4) EPC

(43) Date of publication:
**14.01.2009 Bulletin 2009/03**

(21) Application number: **07742589.0**

(22) Date of filing: **27.04.2007**

(51) Int Cl.:
***G02B 6/12*** *(2006.01)*

(86) International application number:
**PCT/JP2007/059154**

(87) International publication number:
**WO 2007/126045 (08.11.2007 Gazette 2007/45)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **28.04.2006 JP 2006126541**

(71) Applicants:
- **OMRON CORPORATION**
  **Kyoto-shi, Kyoto 600-8530 (JP)**
- **Idemitsu Kosan Co., Ltd.**
  **Chiyoda-ku**
  **Tokyo 100-8321 (JP)**

(72) Inventors:
- **KITAMURA, Kyoji**
  **c/o Omron Corporation, 801 Minamifudodo-cho, Shimogyo-ku, Kyoto-shi, Kyoto 600-8530 (JP)**
- **NAKAMURA, Masaki**
  **c/o Omron Corporation, 801 Minamifudodo-cho, Shimogyo-ku, Kyoto-shi, Kyoto 600-8530 (JP)**
- **OKADA, Yasunari,**
  **c/o Idemitsu Kosan Co., Ltd.**
  **Chiyoda-ku Tokyo 100-8321 (JP)**

(74) Representative: **Brochard, Pascale et al**
**Osha Liang**
**32 avenue de l'Opéra**
**75002 Paris (FR)**

# (54) OPTICAL WAVEGUIDE HAVING PERFLUOROADAMANTANE STRUCTURE

(57) The present invention provides an optical waveguide having a low temperature dependence of the difference in refractive index between a core resin and a clad resin and exhibiting excellent optical properties in all the operating temperatures.

An optical waveguide of the present invention includes cured resin products each containing, as constituent components, first fluorine-containing monomers each having a perfluoroadamantane structure.

With this arrangement, it is possible to obtain an optical waveguide that is excellent in both optical properties and temperature dependence of difference in refractive index between a core resin and a clad resin.

FIG. 1

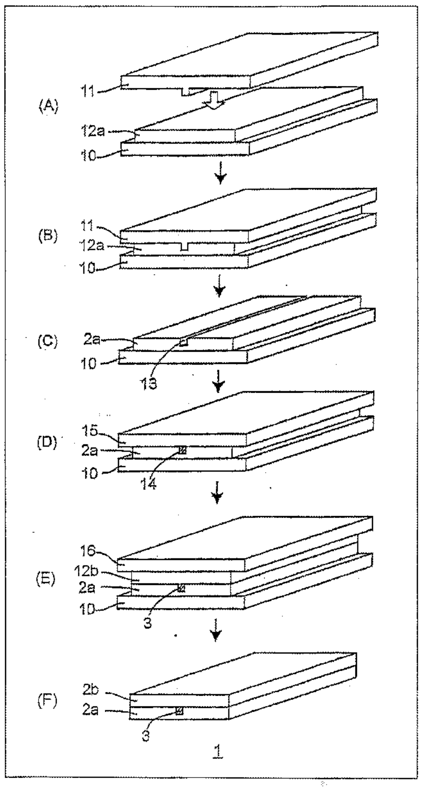


EP 2 015 113 A1

**Description**

TECHNICAL FIELD

The present invention relates to an optical waveguide containing a perfluoroadamantane structure. Particularly, the present invention relates to an optical waveguide having not only a low temperature dependence of the difference in refractive index between a core resin and a clad resin by also excellent optical properties.

BACKGROUND ART

An optical waveguide is a circuit that makes the path of light on a substrate so as to guide optical signals by taking advantage of the differences in refractive index between highly rectilinear light. The optical waveguide is used in an optical transceiver, an optical tap coupler, an optical coupler, an optical switch, VOA, etc., and is a key device to realizing the promotion of broadband infrastructure.

As illustrated in Fig. 1, the optical waveguide is formed of a core resin that transmits light and a clad resin with which the core resin is covered. In the optical waveguide, the refractive indices of the core resin and the clad resin need to be controlled with accuracy (e.g. Patent Document 1). Particularly, in a single-mode optical waveguide for use in high-speed, high-capacity communications, for example, the refractive index of the core resin needs to be higher by 0.3 % to 0.4 % than that of the clad resin and maintains an accuracy within ± 0.02 %. This is because one signal needs to be transmitted straightway with a single optical path length for the purpose of transmitting many signals in a short time. In a case where the core resin and the clad resin are formed by using ultraviolet curing resin, such a minute control of refractive indices is carried out by slightly changing the compounding ratio between the materials for these resin layers.

As the materials for the optical waveguide, inorganic materials such as quartz are used for its low linear expansion coefficient and low light loss produced, but are difficult to be processed and requires a high cost. In view of this, the use of organic materials as the materials for the optical waveguide has been recently increasing.

In the case where the organic materials are used, to carry out property adjustment by using fluorinated resin (for example, refractive index: 1.42) and non-fluorinated resin (for example, refractive index: 1.52), the core resin includes a non-fluorinated resin compounding ratio of which is higher by approximately 4 % to 5 %. In this manner, the difference in refractive index is attained by providing such a fine difference between the compounding ratios of the core resin and the clad resin. In this case, properties of the core resin and the clad resin, particularly the temperature dependences of the refractive indices, can be made extremely close to each other. This circumvents the decrease in optical properties of the optical waveguide at 85 °C, which is an upper limit of operating temperatures of the optical waveguide. The fluorinated resin is used suitably to reduce light loss caused by C-H bonds of the non-fluorinated resin. Further, in a case where importance is placed on the reduction of light loss at temperatures near room temperature, the property adjustment can be carried out using the fluorinated resins alone. Note that the optical properties can be used as a synonym for light loss.

[Patent Document 1]
WO 2004/104059 A1 (international publication date: December 2, 2004)

However, the property adjustment using the fluorinated resin and the non-fluorinated resin faces the effect of light loss caused by C-H bonds of the non-fluorinated resin and particularly has the problem that it causes a high light loss at temperatures near room temperature (hereinafter referred to as "initial optical properties").

On the other hand, the property adjustment using the fluorinated resins alone to place importance on the reduction of the initial optical properties has the problem that it causes a high temperature dependence of the difference in refractive index. Specifically, the refractive index can be said to have a strong correlation with the density of resin since the refractive index is represented by the following equation 1:

$$n = ((1+2[R]/V)/(1 - [R]/V))^{1/2} \ldots(1)$$

where n is refractive index, [R] is molecular refraction, V = M/p, V is molecular volume, M is molecular weight, and ρ is density.

However, since the density varies depending upon a temperature, the following equation (2) needs to be practically taken into consideration.

$$\Delta n/\Delta t \approx (n-1) \cdot (-3\alpha) \ldots(2)$$

where $\Delta n/\Delta t$ is temperature dependence of the refractive index, n is refractive index, and $\alpha$ is linear expansion coefficient.

The operating temperatures of the optical waveguide generally range from -40 °C to 85 °C. In order to exhibit stable optical properties in the operating temperatures, the temperature dependence of the difference in refractive index between the core resin and the clad resin, i.e. the difference in linear expansion coefficient between the resins need to be decreased.

To secure the difference in refractive index between the core resin and the clad resin, the core resin needs to be arranged, as compared to the clad resin, such that the amount of resin having a low fluorine content (e.g. refractive index: 1.42) is larger by approximately 10 % than the amount of resin having a high fluorine content (e.g. refractive index: 1.37). The property adjustment made by change of the number of carbons in perfluoro group and change of the compounding amounts by using fluorinated (meth)acrylate containing perfluoroalkyl group, which was conventionally a mainstream material (e.g. Japanese Unexamined Patent Publication, *Tokukai,* No. 2000-26540), causes decrease of glass transition temperature (hereinafter referred to as "Tg") of the clad resin, i.e. increase of linear expansion coefficient. This results in increase of the temperature dependence of the difference in refractive index and degradation of the optical properties at 85 °C.

From these facts, the conventional optical waveguide including the ultraviolet curing resins tends to be such that the temperature dependence of the refractive index was high in the clad resin and low in the core resin, and it was difficult for the conventional optical waveguide to realize both the initial optical properties and optical properties at 85 °C, which is an upper limit of the operating temperatures of the optical waveguide.

The present invention has been attained in view of the above problem, and an object of the present invention is to provide an optical waveguide that realizes a low temperature dependence of the difference in refractive index between a core resin and a clad resin and exhibits excellent optical properties at all the operating temperatures.

DISCLOSURE OF INVENTION

The inventors of the present invention diligently worked to solve the foregoing problems and accomplished the present invention by finding that an optical waveguide including cured resin products each obtained by polymerization of resin compositions, each of the resin compositions containing, as constituent components, fluorine-containing monomers each having a perfluoroadamantane structure can maintain a low temperature dependence of the difference in refractive index between a core resin and a clad resin and exhibit excellent optical properties.

That is, an optical waveguide according to the present invention includes cured resin products each obtained by polymerization of resin compositions, each of the resin compositions containing, as constituent components, first fluorine-containing monomers each having a perfluoroadamantane structure. It is known that a polymer with excellent heat resistance, excellent mechanical strength, such as resistance to shock and surface hardness, and excellent optical properties is obtained by polymerization of the fluorine-containing monomers each having the perfluoroadamantane structure (e.g. Japanese Unexamined Patent Publication, *Tokukai,* No. 2004-123687).

Thus, by taking advantage of heat resistance of the above cured resin products used for the clad resin and the core resin, it is possible to obtain an optical waveguide that maintains a low temperature dependence of the difference in refractive index between the core resin and the clad resin. Further, an optical waveguide according to the present invention can decrease light loss since it does not contain a non-fluorinated resin. As a result, it is possible to obtain an optical waveguide having excellent optical properties.

Further, an optical waveguide according to the present invention is such that the first fluorine-containing monomer has a functional group represented by the following General Formula (1):

$$-O_p-[(CCR_1R_2)_q-CH_2-O_r]_s-COC(R_3)-CH_2 \qquad (1)$$

where: $R_1$ and $R_2$ are H or F and may be the same or different; $R_3$ is H, $CH_3$, F, or $CF_3$; p = 0 or 1; when p = 0, it is q = 0 to 5, r = 1, and s = 1; when p = 1, it is q = 0 or 1, r = 0 or 1, and s = 0 to 3; and an upper limit of $(q + 1) \times s$ is 6.

* 16 According to the above arrangement, it is possible to give the optical waveguide the properties brought by the perfluoroadamantane structure, and it is possible to appropriately adjust linear expansion coefficients of the core resin and the clad resin by adjustment of kinds and number of functional groups represented by General Formula (1). Therefore, it is possible to obtain an optical waveguide capable of maintaining a low temperature dependence of the difference in refractive index between the core resin and the clad resin and exhibit excellent optical properties.

Still further, the optical waveguide according to the present invention is preferably such that the first fluorine-containing monomer has one to three functional groups each represented by General Formula (1).

When the first fluorine-containing monomer has one to three functional groups, it is relatively easy to carry out synthesis. Therefore, it is possible to more efficiently obtain an optical waveguide of the present invention.

Yet further, the optical waveguide according to the present invention preferably includes cured resin products each obtained by polymerization of resin compositions, each of the resin compositions containing, as constituent components, (i) a polymer obtained by polymerization of the first fluorine-containing monomers and (ii) second fluorine-containing monomers each containing at least two functional groups each represented by General Formula (1).

According to the above arrangement, either or both a polymer of the first fluorine-containing monomers and a copolymer of the first fluorine-containing monomers are dissolved in the second fluorine-containing monomer or subjected to other treatment. This allows the above polymer to have higher heat resistance. Therefore, it is possible to obtain an optical waveguide maintaining a lower temperature dependence of the difference in refractive index between the core resin and the clad resin.

Further, the optical waveguide according to the present invention is preferably such that at least one kind of the second fluorine-containing monomers is a third fluorine-containing monomer containing the perfluoroadamantane structure. According to the above arrangement, it is possible to give the fluorine-containing monomer high heat resistance and optical properties both derived from the perfluoroadamantane structure. Therefore, it is possible to obtain an optical waveguide having more desirable properties by adjustment the combination with the polymer obtained by polymerization of the first fluorine-containing monomers.

Still further, the optical waveguide according to the present invention preferably includes cured resin products each obtained by polymerization of resin compositions, each of the resin compositions containing, as constituent components, (i) a third fluorine-containing monomer containing the perfluoroadamantane structure, and at least two functional groups each represented by General Formula (1), and (ii) a fluorine-containing monomer other than the third fluorine-containing monomer.

According to the above arrangement, for example, the resin composition can be obtained by combination of a fluorine-containing monomer having at least two functional groups and the perfluoroadamantane structure and other fluorine-containing monomer having the non-perfluoroadamantane structure, and others. This avoids the tendency of the core and clad resins to become brittle, which tendency occurs when the resins are formed only of the compounds having the perfluoroadamantane structure, and degradation of temperature properties and other problems, which occur when the cured resin product is obtained by polymerization of the resin compositions each containing monofunctional fluorine-containing monomers alone. Therefore, it is possible to obtain an optical waveguide having more desirable properties.

Note that a fluorine-containing monomer having t-number of functional groups each represented by General Formula (1) is hereinafter also referred to as "t-functional fluorine-containing monomer."

Yet further, the optical waveguide according to the present invention preferably includes cured resin products each obtained by polymerization of resin compositions, each of the resin compositions containing, as constituent components, (i) a fourth fluorine-containing monomer containing the perfluoroadamantane structure and one functional group represented by General Formula (1), and (ii) the second fluorine-containing monomers.

According to the above arrangement, the resin composition can be obtained by combination of a fluorine-containing monofunctional monomer having the perfluoroadamantane structure and a fluorine-containing bi- or poly-functional monomer.

This avoids the tendency of the core and clad resins to become brittle, which tendency occurs when the resins are formed only of the compounds having the perfluoroadamantane structure, and degradation of temperature properties and other problems, which occur when the cured resin product is obtained by polymerization of the resin compositions each containing monofunctional fluorine-containing monomers alone. Therefore, it is possible to obtain an optical waveguide having more desirable properties.

Further, the optical waveguide according to the present invention may be such that at least one kind of the second fluorine-containing monomers is a third fluorine-containing monomer containing the perfluoroadamantane structure.

According to the above arrangement, the resin composition has a high third fluorine-containing monomer content. This makes it possible to increase heat resistance of the cured resin product. Therefore, it is possible to decrease the temperature dependence of the difference in refractive index between the core resin and the clad resin.

Still further, the optical waveguide according to the present invention preferably includes cured resin products each obtained by polymerization of resin compositions, each of the resin compositions containing, as constituent components, the polymer and the second fluorine-containing monomer, wherein the polymer is obtained by polymerization of: (i) a fourth fluorine-containing monomer containing the perfluoroadamantane structure and one functional group represented by General Formula (1); and (ii) a fifth fluorine-containing monomer that is a fluorine-containing monomer other than the fourth fluorine-containing monomer and contains one functional group represented by General Formula (1).

According to the above arrangement, a fluorine-containing bi- or poly-functional monomer included in a resin composition for clad resin and having the non-perfluoroadamantane structure can be substituted with a fluorine-containing monofunctional monomer having the perfluoroadamantane structure. This makes it possible to increase the temperature dependence of refractive index of the core resin. As a result, it is possible to decrease the difference in refractive index between the core resin and the clad resin in the optical waveguide.

Yet further, the optical waveguide according to the present invention is preferably such that the second fluorine-containing monomers are the third fluorine-containing monomer and a fluorine-containing monomer other than the third fluorine-containing monomer.

According to the above arrangement, the resin composition has a high third fluorine-containing monomer content. This makes it possible to increase heat resistance of the cured resin product. Therefore, it is possible to decrease the temperature dependence of the difference in refractive index between the core resin and the clad resin.

Further, the optical waveguide according to the present invention is preferably such that the polymer is obtained by polymerization of the fourth fluorine-containing monomer and the fifth fluorine-containing monomer, and at least one kind of the second fluorine-containing monomers is a third fluorine-containing monomer containing the perfluoroadamantane structure.

According to the above arrangement, the resin composition has a high third fluorine-containing monomer content. This makes it possible to increase heat resistance of the cured resin product. Therefore, it is possible to decrease the temperature dependence of the difference in refractive index between the core resin and the clad resin.

Still further, the optical waveguide according to the present invention is preferably such that the cured resin product is produced by a photo radical polymerization method and/or a thermal radical polymerization method. In these polymerization methods, the amount of polymerization initiator and a reaction time are adjusted appropriately to efficiently polymerize the monomers. This makes it possible to generate a cured resin product having a desired degree of polymerization. As a result, it is possible to contribute to production efficiency of an optical waveguide according to the present invention.

As described above, an optical waveguide according to the present invention includes cured resin products each containing, as constituent components, first fluorine-containing monomers each having a perfluoroadamantane structure.

Therefore, it is possible to maintain a low temperature dependence of the difference in refractive index between the core resin and the clad resin, and it is possible to obtain an optical waveguide that decreases light loss caused by the resins and has excellent optical properties.

Additional objects, features, and strengths of the present invention will be made clear by the description below. Further, the advantages of the present invention will be evident from the following explanation in reference to the accompanying drawing.

## BRIEF DESCRIPTION OF DRAWINGS

Fig. 1 is a diagram of a process flow for forming an optical waveguide by a stamper method.

## EXPLANATION OF REFERENCE NUMERALS

| | |
|---|---|
| 1 | optical waveguide |
| 2a | lower clad portion |
| 2b | upper clad portion |
| 3 | core portion |
| 10 | substrate |
| 11 | convex stamper |
| 12a | cured resin product for lower clad portion |
| 12b | curable resin composition for upper clad portion |
| 13 | concave section |
| 14 | cured resin product for core portion |
| 15 | flat plate |
| 16 | substrate |

BEST MODE FOR CARRYING OUT THE INVENTION

The following will describe an embodiment of the present invention. The present invention is not limited in any ways by the following description.

[1. Optical Waveguide According to the Present Invention]

In one embodiment, an optical waveguide according to the present invention includes cured resin products each obtained by polymerization of resin compositions, each of the resin compositions containing, as constituent components, first fluorine-containing monomers each having a perfluoroadamantane structure. The perfluoroadamantane structure is a skeleton structure in which all hydrogens in adamantane are substituted with fluorines. The first fluorine-containing monomer herein refers to a monomer having the perfluoroadamantane structure and a monomer in which fluorine atoms of the perfluoroadamantane structure are substituted with other functional groups.

The number of fluorine atoms substituted is not particularly limited. In an optical waveguide of the present invention, the first fluorine-containing monomer needs to have at least one fluorine atom since fluorinated resin needs to be used to improve the initial optical properties. In practice, for ease of synthesis, the number of fluorine atoms substituted is preferably in the range from one to three. That is, the number of functional groups is, but is not limited to, preferably in the range from one to three.

It is preferable that the functional group is, but is not limited to, a radical polymerizable group, considering that the monomer is polymerized by a generally-used method such as a photo radical polymerization method or a thermal radical polymerization method. Lightweight functional groups containing hydrogen, such as a hydroxyl group and a SH group, are not preferable since they can easily vibrate and therefore become a cause of light loss.

The radical polymerizable group can be, but is not particularly limited to, a (meth)acryloyloxy group, a (meth) acrylamide group, a vinyl group (including an allyl group and a methacrylate group), an ethynyl group, an isopropenyl group, a vinyl ether group, a vinyl thioether group, a vinyl ketone group, a vinyl ester group, or a vinyl amino group. The radical polymerizable group is particularly preferably a functional group represented by General Formula (1).
Structural formula of a fluorine-containing monomer having one to three functional groups represented by General Formula (1) and having the perfluoroadamantane structure is represented by the following General Formula (2):

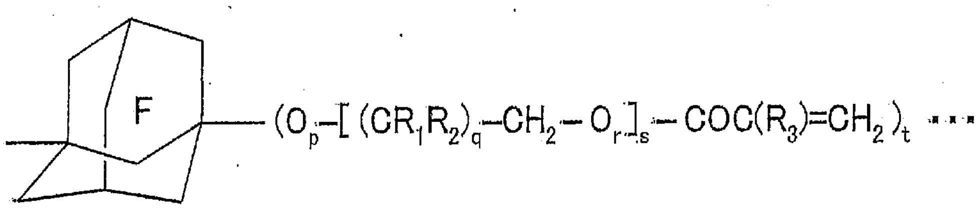 ···(2)

In General Formula (2), $R_1$ and $R_2$ are H or F and may be the same or different. $R_3$ is H, $CH_3$, F, or $CF_3$. It is P = 0 or 1. When p = 0, q = 0 to 5, r = 1, and s = 1. When p = 1, q = 0 or 1, r = 0, and s = 0 to 3. Note that an upper limit of $(q + 1) \times s$ is 6. It is not preferable that $(q + 1) \times s$ is not less than 7 since light loss caused by C-H bonds increases. It is t = 1 to 3.

In General Formula (1), $R_3$ may be any one of H, $CH_3$, F, and $CF_3$. If R is H or $CH_3$, it is advantageous in terms of ease of synthesis. If $R_3$ is F or $CF_3$, it is advantageous for use in an optical waveguide since light loss caused by C-H bonds decreases.

A method for producing the first fluorine-containing monomer can be a conventional method, and is not particularly limited. For example, the producing method can be a method of azeotropically dehydrating a perfluoroadamantanol and an acrylic acid under reflux of a solvent.

Examples of the perfluoroadamantanol includes, but are not particularly limited to, perfluoro-1-adamantanol, perfluoro-1,3-adamantandiol, perfluoro-1,3,5-adamantantriol, and perfluoro-1,3,5,7-adamantantetraol. Examples of the acrylic acid includes, but are not particularly limited to, acrylic acid, methacrylic acid, and α-trifluoromethyl acrylate. The reaction solvent is preferably, but is not particularly limited to, toluene, xylene, or the like.

Further, the reaction of the perfluoroadamantanol with the acrylic acid may be carried out by dehydration esterification with the use of a dehydrating agent. The dehydrating agent can be a molecular sieve or a conventionally known acidic dehydrating agent, such as sodium sulfate anhydride, magnesium sulfate anhydride, or phosphoric acid anhydride.

Alternatively, the first fluorine-containing monomer can be produced by esterification reaction of a perfluoroadamantanol with an acrylic acid in the presence of a base, for example. Examples of the base to be used therein include trimethylamine, triethylamine, pyridine, and N,N-dimethylaniline.

Further, the fluorine-containing monomer can be produced by esterification reaction of perfluoroadamantyl alkoxide with an acrylic acid chloride.

The "cured resin product" herein refers to a product obtained by polymerization of resin compositions each containing first fluorine-containing monomers as constituent components. Note that the "resin composition" herein refers to a mixture of monomers or a mixture of a monomer and a polymer.

The resin composition only needs to contain at least the first fluorine-containing monomers as constituent components and may contain a monomer other than the first fluorine-containing monomer.

For decrease of light loss, the monomer other than the first fluorine-containing monomer is preferably a fluorine-containing monomer, and can be, for example, a fluorine-containing monomer having a non-perfluoroadamantane structure, such as 1,3-bis((meth)acryloyloxymethyl)perfluoropropane, 1,4-bis((meth)acryloyloxymethyl)perfluorobutane, 1,4-bis((meth)acryloyloxyethyl)perfluorobutane, 1,6-bis((meth)acryloyloxymethyl)perfluorohexane, 1,8-bis((meth)acryloyloxymethyl)perfluorooctane, 1,2-bis(acryloyloxymethyl)perfluorocyclohexane, 1,3-bis(acryloyloxymethyl)perfluorocyclohexane, 1,4-bis(acryloyloxymethyl)perfluorocyclohexane, 1,2-bis(acryloyloxymethyl)tetrafluorobenzene, 1,3-bis (acryloyloxymethyl)tetrafluorobenzene, 1,4-bis(acryloyloxymethyl)tetrafluorobenzene, perfluoroethylmethyl(meth)acrylate, perfluoropropylmethyl(meth)acrylate, perfluorobutylmethyl(meth)acrylate, perfluoropentylethyl(meth)acrylate, perfluorohexylethyl(meth)acrylate, perfluorooctylethyl(meth)acrylate, or perfluorocyclohexylmethyl(meth)acrylate. In order to obtain the advantageous effects of the present invention, a first fluorine-containing monomer content in a total amount of resin composition before curing needs to be not less than 5 % by weight. An upper limit of the first fluorine-containing monomer content is, but is not particularly limited to, desirably not more than 50 % by weight, particularly more desirably not more than 30 %. This is because in a case where both the core resin and the clad resin are formed of the compounds having the perfluoroadamantane structure when p = 1, q, r, and s = 0, and t = 2 or more in General Formula (2), crosslinking density becomes high and an adamantane structure content in total becomes high, which causes the tendency of the resin to become brittle.

The upper limit of the first fluorine-containing monomer content is not particularly limited when p # 1, q, r, and s $\neq$ 0, and t = 2 or more. However, when t = 1, the upper limit of the first fluorine-containing monomer content is desirably not more than 70 % by weight for securing of heat resistance, particularly desirably not more than 60 % by weight.

The cured resin product can be produced by polymerization of resin compositions. The resin composition may be composed of monomers alone, or may be obtained by dissolving a polymer obtained by polymerization of monomers into other monomers.

A polymerization method is not particularly limited. However, photo radical polymerization method and/or thermal radical polymerization method is preferably used since it allows for efficient chain production of a polymer by taking advantage of radical reaction.

The photo-polymerization initiator used in the photo radical polymerization method is, but is not particularly limited to, any of the following generally-used photo-polymerization initiators: carbonyl compound-based photo-polymerization initiators, such as acetophenones, benzophenones, diacetyls, benzyls, benzoins, benzoin ethers, benzyldimethyl ketanols, benzoyl benzoates, hydroxyphenyl ketones, and aminophenyl ketones; organic sulfur compound-based photo-polymerization initiators, such as thiuram sulfides and thioxanthones; and organic phosphor compound-based photo-polymerization initiators, such as acyl phosphine oxides and acyl phosphinic acid esters. These photo-polymerization initiators may be used alone or in combination of two or more kinds. In Examples, which will be described later, Lucirin® TPO is used as a photo-polymerization initiator.

The compounding rate of the photo-polymerization initiator is in the range from 0.5 to 10 % by weight, preferably 1 to 7 % by weight, relative to the total amount of the resin composition containing monomers. When the compounding rate is less than 0.5 % by weight, the photo-curing property becomes insufficient. The compounding rate exceeding 10 % by weight is not preferable since a too quick curing reaction occurs and has adverse effects on the physical properties of the cured product.

Among thermal polymerization initiators that are decomposed by heat to generate radicals, the thermal polymerization initiators used in the thermal radical polymerization method are thermal polymerization initiators having a thermal decomposing temperature of approximately 30 °C or more, preferably approximately 60 °C or more. The thermal polymerization initiators are not particularly limited. However, as the thermal polymerization initiators, organic peroxides that produce no by-products such as gases and water are particularly suitably used. The use of thermal polymerization initiators having a thermal decomposing temperature of less than approximately 30 °C makes the cured resin product instable and thus are not preferable.

The organic peroxides are not particularly limited and can be known organic peroxides such as alkyl- or aryl-hydroperoxides, dialkyl- or diaryl-peroxides, alkyl-peroxide acids and esters thereof, diacyl-peroxides and ketone-peroxides. These thermal polymerization initiators may be used alone or in combination of two or more kinds.

The compounding rate of the thermal polymerization initiator is in the range from 0.5 to 5 % by weight, preferably

1 to 3 % by weight, relative to the total amount of the resin composition containing monomers. When the compounding rate is less than 0.5 % by weight, the thermo-curing property becomes insufficient. The compounding rate exceeding 5 % by weight is not preferable since a too quick curing reaction occurs and has adverse effects on the physical properties of the cured resin product.

The photo-polymerization initiator and the thermal polymerization initiator may be used alone or in combination. In combination use of the photo-polymerization initiator and the thermal polymerization initiator, the respective compounding rates are as described above.

The photo radical polymerization is generally carried out by exposure of the resin composition containing monomers to ultraviolet rays. Examples of a light source of ultraviolet rays include a super-high pressure mercury lamp, a high pressure mercury lamp, a low pressure mercury lamp, a metal halide lamp, a carbon arc light, and a xenon lamp. However, a high pressure mercury lamp or a metal halide lamp is suitably used. The amount of ultraviolet rays to which the resin composition is exposed is preferably, but is not particularly limited to, in the range from 1000 to 5000 mJ/cm$^2$.

In the thermal radical polymerization in which the organic peroxide is used as the thermal polymerization initiator, the curing process is carried out by heating the organic peroxide to a temperature higher than the thermal decomposing temperature of the organic peroxide. Therefore, although the heating temperature depends on the kinds of the organic peroxide to be added, the heating time is normally in the range from 10 to 60 minutes.

In a case where the photo-curing and thermo-curing processes are carried out with both of the photo-polymerization initiator and the organic peroxide added thereto, the photo-curing process through exposure to ultraviolet rays is followed by the thermo-curing process carried out by heating. In this manner, the curing process is generally completed. In comparison with the thermo-curing process, the photo-curing process is superior in ease of handling, curing speed, and the like. Therefore, it is preferable to adopt the photo-curing process in the present invention.

An optical waveguide of the present invention includes cured resin products each obtained by polymerization of resin compositions, each of the resin compositions containing, as constituent components, first fluorine-containing monomers each having a perfluoroadamantane structure. If necessary, the optical waveguide of the present invention may contain, as components other than the cured resin products, a small amount of additives, such as a polymerization inhibitor, an antifoam, a photo-stabilizer, a thermal stabilizer, a leveling agent, a coupling agent and an antistatic agent.

A method for forming an optical waveguide is not particularly limited and can be a conventionally known method, for example, selective polymerization method, photolithography + RIE method, direct exposing method, bleach method, stamper method, or the like. Among these methods, stamper method is preferably used since it brings great productivity and is low in cost.

Fig. 1 is a diagram of a process flow for forming an optical waveguide by the stamper method. First of all, as illustrated in (A) of Fig. 1, a cured resin product 12a for lower clad portion is applied to a substrate 10 through a well-known method, such as a spin coating method or a doctor blade method, and a convex stamper 11 is then pressed thereon.

With the convex stamper 11 pressed thereon, a photo-curing process and/or a thermo-curing process is then carried out to form a lower clad portion 2a having a concave section 13 corresponding to a core portion ((B) and (C) in Fig. 1). After the convex stamper 11 is removed, the concave section 13 is filled with a cured resin product 14 for the core portion, and a photo-curing process or/and a thermo-curing process is carried out with a flat plate 15 pressed thereon to form a core portion 3 ((D) in Fig. 1).

Finally, a curable resin composition 12b for upper clad portion is applied thereto, and a photo-curing process and/or a thermo-curing process is carried out with a substrate 16 pressed thereon to thereby form an upper clad portion 2b ((E) in Fig. 1). Then, the substrate is removed, and an optical waveguide 1 is completed ((F) in Fig. 1). As the substrates 10 and 16, transparent substrates such as glass plates are used when the photo-curing process is carried out.

In one embodiment, an optical waveguide of the present invention is such that the first fluorine-containing monomer has the functional groups each represented by General Formula (1).

The number of functional groups included in the first fluorine-containing monomer and represented by General Formula (1) is not particularly limited as long as the number thereof is at least one. In practice, the number of functional groups is preferably in the range from one to three in terms of difficulty of synthesis, although heat resistance of the cured resin product increases as the number of functional groups increases.

Examples of the first fluorine-containing monomer having the functional groups each represented by General Formula (1) include perfluoro-1,3, 5-adamantanetriol tri(meth)acrylate, perfluoro-1,3,5-adamantanetriol tri(2-fluoroacrylate), perfluoro-1,3,5-adamantanetriol tri[(2-trifluoromethyl)acrylate], perfluoro-1,3,5-adamantane trimethanol tri(meth) acrylate, perfluoro-1,3, 5-adamantanetrimethanol tri(2-fluoroacrylate), perfluoro-1,3,5-adamantanetrimethanol tri[(2-trifluoromethyl)acrylate], perfluoro-1,3,5-adamantanetriethanol tri(meth)acrylate, perfluoro-1,3,5-adamantanetriethanol tri (2-fluoroacrylate), perfluoro-1,3,5-adamantanetriethanol tri[(2-trifluoromethyl)acrylate], perfluoro-1,3,5-tris((meth)acryloyloxyethoxy)adamantane, perfluoro-1,3,5-tris(2-fluoroacryloyloxyethoxy)adamantane, perfluoro-1,3,5-tris[2-(trifluoromethyl)acryloyloxyethoxy]a damantane, perfluoro-1,3,5-tris[((meth)aeryloyloxyethoxy)ethoxy]adam antane, perfluoro-1,3,5-tris[(2-fluoroacryloyloxyethoxy)ethoxy]ada mantane, perfluoro-1,3,5-tris{[2-(trifluoromethyl)acryloyloxyethoxy]e thoxy}adamantane, perfluoro-1,3,5-adamantane tri(2,2-difluoroethanol)tri(meth)acrylate, perfluoro-1,3,5-adamantane

tri(2,2-difluoroethanol) tri(2-fluoroacrylate), perfluoro-1,3,5-adamantane tri(2,2-difluoroethanol) tri[(2-trifluoromethyl)acrylate], perfluoro-1,3-adamantanediol di(meth)acrylate, perfluoro-1,3-adamantanediol di(2-fluoroacrylate), perfluoro-1,3-adamantanediol di[(2-trifluoromethyl)acrylate], perfluoro-1,3-adamantanedimethanol di(meth)acrylate, perfluoro-1,3-adamantanedimethanol di(2-fluoroacrylate), perfluoro-1,3-adamantanedimethanol di[(2-trifluoromethyl)acrylate], perfluoro-1,3-adamantanediethanol di(meth)acrylate, perfluoro-1,3-adamantanediethanol di(2-fluoroacrylate), perfluoro-1,3-adamantanediethanol di[(2-trifluoromethyl)acrylate], perfluoro-1,3-bis((meth)acryloyloxyethoxy)adamantane, perfluoro-1,3-bis(2-fluoroacryloyloxyethoxy)adamantane, perfluoro-1,3-bis[2-(trifluoromethyl)acryloyloxyethoxy]ada mantane, perfluoro-1,3-bis[((meth)acryloyloxyethoxy)ethoxy]adamant ane, perfluoro-1,3-bis[(2-fluoroacryloyloxyethoxy) ethoxy]adama ntane, perfluoro-1,3-bis{[2-(trifluoromethyl)acryloyloxyethoxy]eth oxy}adamantane, perfluoro-1,3-adamantane di(2,2-difluoroethanol)di(meth)acrylate, perfluoro-1,3-adamantane di(2,2-difluoroethanol)di(2-fluoroacrylate), perfluoro-1,3-adamantane di(2,2-difluoroethanol)di[(2-trifluoromethyl)acrylate], perfluoro-1-adamantyl(meth)acrylate, perfluoro-1-adamantyl 2-fluoroacrylate, perfluoro-1-adamantyl 2-(trifluoromethyl)acrylate, (perfluoro-1-adamantyl)methyl(meth)acrylate, (perfluoro-1-adamantyl)methyl 2-fluoroacrylate, (perfluoro-1-adamantyl)methyl 2-(trifluoromethyl) acrylate, 2-(perfluoro-1-adamantyl)ethyl(meth)acrylate, 2-(perfluoro-1-adamantyl)ethyl 2-fluoroacrylate, 2-(perfluoro-1-adamantyl)ethyl 2-(trifluoro)acrylate, 2-(perfluoro-1-adamantyloxy)ethyl(meth)acrylate, 2-(perfluoro-1-adamantyloxy) ethyl 2-fluoroacrylate, 2-(perfluoro-1-adamantyloxy)ethyl 2-(trifluoro)acrylate, 2-[2-(perfluoro-1-adamantyloxy)ethoxy] ethyl(meth)acrylate, 2-[2-(perfluoro-1-adamantyloxy)ethoxy]ethyl 2-fluoroacrylate, 2-[2-(perfluoro-1-adamantyloxy) ethoxy]ethyl 2-(trifluoro)acrylate, 2-(perfluoro-1-adamantyl)-2,2-difluoroethyl(meth)acrylate, 2-(perfluoro-1-adamantyl)-2,2-difluoroethylethyl 2-fluoroacrylate, and 2-(perfluoro-1-adamantyl)-2,2-difluoroethylethyl 2-(trifluoro)acrylate.

In one embodiment, an optical waveguide according to the present invention includes cured resin products each obtained by polymerization of resin compositions, each of the resin compositions containing, as constituent components, (i) a polymer obtained by polymerization of the first fluorine-containing monomers and (ii) second fluorine-containing monomers each containing at least two functional groups each represented by General Formula (1).

The second fluorine-containing monomer is a fluorine-containing monomer containing at least two functional groups each represented by General Formula (1). Although the second fluorine-containing monomer may or may not have the perfluoroadamantane structure, at least one kind of the second fluorine-containing monomers preferably has the perfluoroadamantane structure. This is because heat resistance and high optical properties both derived from the perfluoroadamantane structure are given to the optical waveguide.

Examples of the second fluorine-containing monomer having the perfluoroadamantane structure include: perfluoro-1,3,5-adamantanetriol tri(meth)acrylate, perfluoro-1,3,5-adamantanetriol tri(2-fluoroacrylate), perfluoro-1,3,5-adamantanetriol tri[(2-trifluoromethyl)acrylate], perfluoro-1,3,5-adamantane trimethanol tri(meta)acrylate, perfluoro-1,3,5-adamantane trimethanol tri(2-fluoroacrylate), perfluoro-1,3,5-adamantane trimethanol tri[(2-trifluoromethyl)acrylate], perfluoro-1,3,5-adamantane triethanol tri(meth)acrylate, perfluoro-1,3,5-adamantane triethanol tri(2-fluoroacrylate), perfluoro-1,3,5-adamantane triethanol tri[(2-trifluoromethyl)acrylate], perfluoro-1,3,5-tris((meth)acryloyloxyethoxy)adamantane, perfluoro-1,3,5-tris(2-fluoroacryloyloxyethoxy)adamantane, perfluoro-1,3,5-tris[2-(trifluoromethyl)acryloyloxyethoxy]a damantane, perfluoro-1,3,5-tris((meth)acryloyloxyethoxy)ethoxyadama ntane, perfluoro-1,3,5-tris[(2-fluoroacryloyloxy)ethoxy]ethoxyada mantane, perfluoro-1,3,5-tris{[2-(trifluoromethyl)aeryloyloxyethoxy]e thoxy}adamantane, perfluoro-1,3,5-adamantane tri(2,2-difluoroethanol)tri(meth)acrylate, perfluoro-1,3,5-adamantane tri(2,2-difluoroethanol)tri(2-fluoroacrylate), perfluoro-1,3,5-adamantane tri(2,2-difluoroethanol)tri([(2-trifluoromethyl)acrylate], perfluoro-1,3-adamantanediol di(meth)acrylate, perfluoro-1,3-adamantanediol di(2-fluoroacrylate), perfluoro-1,3-adamantanediol di[(2-trifluoromethyl)acrylate], perfluoro-1,3-adamantanedimethanol di(meth)acrylate, perfluoro-1,3-adamantanedimethanol di(2-fluoroacrylate), perfluoro-1,3-adamantanedimethanol di[(2-trifluoromethyl)acrylate], perfluoro-1,3-adamantanediethanol di(meth)acrylate, perfluoro-1,3-adamantanediethanol di(2-fluoroacrylate), perfluoro-1,3-adamantanediethanol di[(2-trifluoromethyl)acrylate], perfluoro-1,3-bis((meth)acryloyloxyethoxy)adamantane, perfluoro-1,3-bis (2-fluoroacryloyloxyethoxy)adamantane, perfluoro-1,3-bis[2-(trifluoromethyl)acryloyloxyethoxy]ada mantane, perfluoro-1,3-bis[((meth)acryloyloxyethoxy)ethoxy]adamant ane, perfluoro-1,3-bis[(2-fluoroacryloyloxyethoxy)ethoxy]iadam antane, perfluoro-1,3-bis[2-(trifluoromethyl)acryloyloxyethoxy]etho xy)adamantane, perfluoro-1,3-adamantane di(2,2-difluoroethanol) di(meth)acrylate, perfluoro-1,3-adamantane di(2,2-difluoroethanol)di(2-fluoroacrylate), and perfluoro-1,3-adamantane di(2,2-difluoroethanol)di[(2-trifluoromethyl)acrylate].

Further, examples of the second fluorine-containing monomer not having the perfluoroadamantane structure include: 1,3-bis((meth)acryloyloxymethyl)perfluoropropane, 1,4-bis((meth)acryloyloxymethyl)perfluorobutane, 1,4-bis((meth)acryloyloxyethyl)perfluorobutane, 1,6-bis((meth)acryloyloxymethyl)perfluorohexane, 1,8-bis((meth)acryloyloxymethyl)perfluorooctane, 1,2-bis(acryloyloxymethyl)perfluorocyclohexane, 1,3-bis(acryloyloxymethyl)perfluorocyclohexane, 1,4-bis(acryloyloxymethyl)perfluorocyclohexane, 1,2-bis(acryloyloxymethyl)tetrafluorobenzene, 1,3-bis (acryloyloxymethyl)tetrafluorobenzene, and 1,4-bis(acryloyloxymethyl)tetrafluorobenzene.

For example, the cured resin product can be obtained by polymerization of resin compositions each of which is obtained by dissolving a polymer obtained in advance by polymerization of the first fluorine-containing monomers into the second fluorine-containing monomers.

Note that the "polymer" can be synthesized in a solvent by a known method, such as thermal polymerization method or photo-polymerization method. The molecular weight of the "polymer" is preferably in the range of not more than 50,000, more preferably in the range of not more than 40,000. A molecular weight exceeding 50,000 is not preferable since it causes the problem in solubility in or compatibility with a bivalent or higher fluorine-containing monomer.

A large amount of polymer added causes the decrease in crosslinking density of resin. In view of this, the weight ratio of the polymer to the resin composition is preferably in the range of not more than 70 % by weight, more preferably not more than 60 % by weight. On the other hand, the amount of the second fluorine-containing monomer added is preferably not less than 30 % by weight, more preferably not less than 40 % by weight.

In an optical waveguide of the present invention, at least one kind of the second fluorine-containing monomers may be a third fluorine-containing monomer containing the perfluoroadamantane structure. Thus, all the second fluorine-containing monomers may have the perfluoroadamantane structure. In other words, all the second fluorine-containing monomers may be the third fluorine-containing monomers. Note that the third fluorine-containing monomer refers to a fluorine-containing monomer having the perfluoroadamantane structure out of the second fluorine-containing monomers.

Examples of the third fluorine-containing monomer include: 1,3,5-adamantanetriol tri(meth)acrylate, perfluoro-1,3,5-adamantanetriol tri(2-fluoroacrylate), perfluoro-1,3,5-adamantanetriol tri[(2-trifluoromethyl)acrylate], perfluoro-1,3,5-adamantanetrimethanol tri(meth)acrylate, perfluoro-1,3,5-adamantanetrimethanol tri(2-fluoroacrylate), perfluoro-1,3,5-adamantanetrimethanol tri[(2-trifluoromethyl)acrylate], perfluoro-1,3,5-adamantanetriethanol tri(meth)acrylate, perfluoro-1,3,5-adamantanetriethanol tri(2-fluoroacrylate), perfluoro-1,3,5-adamantanetriethanol tri[(2-trifluoromethyl) acrylate], perfluoro-1,3,5-tris((meth)acryloyloxyethoxy)adamantane, perfluoro-1,3,5-tris(2-fluoroacryloyloxyethoxy)adamantane, perfluoro-1,3,5-tris[2-(trifluoromethyl)acryloyloxyethoxy]a damantane, perfluoro-1,3,5-tris((meth)acryloyloxyethoxy)ethoxyadama ntane, perfluoro-1,3,5-tris[(2-fluoroacryloyloxy)ethoxy]ethoxyada mantane, perfluoro-1,3,5-tris{[2-(trifluoromethyl)aeryloyloxyethoxyje thoxy}adamantane, perfluoro-1,3,5-adamantane tri(2,2-difluoroethanol)tri (meth)acrylate, perfluoro-1,3,5-adamantane tri(2,2-difluoroethanol)tri(2-fluoroacrylate), perfluoro-1,3,5-adamantane tri (2,2-difluoroethanol)tri([(2-trifluoromethyl)acrylate], perfluoro-1,3-adamantanediol di(meth)acrylate, perfluoro-1,3-adamantanediol di(2-fluoroacrylate), perfluoro-1,3-adamantanediol di[(2-trifluoromethyl)acrylate], perfluoro-1,3-adamantanedimethanol di(meth)acrylate, perfluoro-1,3-adamantanedimethanol di(2-fluoroacrylate), perfluoro-1,3-adamantanedimethanol di[(2-trifluoromethyl)acrylate], perfluoro-1,3-adamantanediethanol di(meth)acrylate, perfluoro-1,3-adamantanediethanol di(2-fluoroacrylate), perfluoro-1,3-adamantanediethanol di[(2-trifluoromethyl)acrylate], perfluoro-1,3-bis((meth)acryloyloxyethoxy)adamantane, perfluoro-1,3-bis(2-fluoroacryloyloxyethoxy)adamantane, perfluoro-1,3-bis [2-(trifluoromethyl)acryloyloxyethoxy]ada mantane, perfluoro-1,3-bis[((meth)acryloyloxyethoxy)ethoxy]adamant ane, perfluoro-1,3-bis[(2-fluoroacryloyloxyethoxy)ethoxy]iadam antane, perfluoro-1,3-bis[2-(trifluoromethyl)acryloyloxyethoxy]etho xy)adamantane, perfluoro-1,3-adamantane di(2,2-difluoroethanol)di(meth)acrylate, perfluoro-1,3-adamantane di(2,2-difluoroethanol)di(2-fluoroacrylate), and perfluoro-1,3-adamantane di(2,2-difluoroethanol)di[(2-trifluoromethyl)acrylate].

In an embodiment, an optical waveguide according to the present invention includes cured resin products each obtained by polymerization of the resin compositions, each of the resin compositions containing, as constituent components, (i) a third fluorine-containing monomer containing the perfluoroadamantane structure and at least two functional groups each represented by General Formula (1), and (ii) a fluorine-containing monomer other than the third fluorine-containing monomer.

That is, the monomer containing at least two functional groups each represented by General Formula (1) may be a monomer obtained by combination of the third fluorine-containing monomer with a fluorine-containing monomer other than the third fluorine-containing monomer.

Examples of the fluorine-containing monomer other than the third fluorine-containing monomer include: a fluorine-containing bi- or poly-functional monomer having the non perfluoroadamantane structure; a fluorine-containing monofunctional monomer having the perfluoroadamantane structure; and a fluorine-containing monofunctional monomer having the non-perfluoroadamantane structure.

Examples of the fluorine-containing bi- or poly-functional monomer having the non-perfluoroadamantane structure include: 1,3-bis((meth)acryloyloxymethyl)perfluoropropane, 1,4-bis((meth)acryloyloxymethyl)perfluorobutane, 1,4-bis((meth)acryloyloxyethyl)perfluorobutane, 1,6-bis((meth)acryloyloxymethyl)perfluorohexane, 1,8-bis((meth)acryloyloxymethyl)perfluorooctane, 1,2-bis(acryloyloxymethyl)perfluorocyclohexane, 1,3-bis(acryloyloxymethyl)perfluorocyclohexane, 1,4-bis(acryloyloxymethyl)perfluorocyclohexane, 1,2-bis(acryloyloxymethyl)tetrafluorobenzene, 1,3-bis (acryloyloxymethyl)tetrafluorobenzene, and 1,4-bis(acryloyloxymethyl)tetrafluorobenzene.

Examples of the fluorine-containing monofunctional monomer having the perfluoroadamantane structure include: perfluoro-1-adamantyl(meth)acrylate, perfluoro-1-adamantyl 2-fluoroacrylate, perfluoro-1-adamantyl 2-(trifluoromethyl)acrylate, (perfluoro-1-adamantyl) methyl(meth)acrylate, (perfluoro-1-adamantyl) 2-fluoroacrylate, (perfluoro-1-adamantyl) 2-(trifluoro)acrylate, 2-(perfluoro-1-adamantyl)ethyl(meth)acrylate, 2-(perfluoro-1-adamantyl)ethyl 2-fluoroacrylate, 2-(perfluoro-1-adamantyl)ethyl 2-(trifluoro)acrylate, 2-(perfluoro-1-adamantyloxy)ethyl(meth)acrylate, 2-(perfluoro-1-adamantyloxy)ethyl 2-fluoroacrylate, 2-(perfluoro-1-adamantyloxy)ethyl 2-(trifluoro)acrylate, 2-[2-(perfluoro-1-adamantyloxy)ethoxy]ethyl(meth)acrylate, 2-[2-(perfluoro-1-adamantyloxy)ethoxy]ethyl 2-fluoroacrylate, 2-[2-(perfluoro-1-adamantyloxy)ethoxy]ethyl 2-(trifluoro)acrylate, 2-(perfluoro-1-adamantyl)-2,2-difluoroethyl(meth)acrylate, 2-(perfluoro-1-adamantyl)-2,2-difluoroethylethyl 2-fluoroacrylate, and 2-(perfluoro-1-adamantyl)-2,2-difluoroethylethyl 2-(trifluoro)acrylate.

Examples of the fluorine-containing monofunctional monomer having the non-perfluoroadamantane structure include: perfluoroethylmethyl(meth)acrylate, perfluoropropylmethyl(meth)acrylate, perfluorobutylmethyl(meth)acrylate, perfluoropentylethyl(meth)acrylate, perfluorohexylethyl(meth)acrylate, perfluorooctylethyl(meth)acrylate, and perfluorocyclohexylmethyl(meth)acrylate.

By substituting, for example, a fluorine-containing bi- or poly-functional monomer included in a resin composition for clad resin and having the non-perfluoroadamantane structure with a fluorine-containing bi- or poly-functional monomer having the perfluoroadamantane structure, like the third fluorine-containing monomer, it is possible to decrease the temperature dependence of a refractive index of the clad resin. As a result, it is possible to maintain a low temperature dependence of the difference in refractive index between the core resin and the clad resin.

Further, by substituting a fluorine-containing bi- or poly-functional monomer included in resin compositions for core resin and clad resin and having the non-perfluoroadamantane structure with a fluorine-containing bi- or poly-functional monomer having the perfluoroadamantane structure, like the third fluorine-containing monomer, in such a manner the amount of substitution in the resin composition for clad resin is larger than the amount of substitution in the resin composition for core resin, it is possible to decrease the temperature dependence of a refractive index of the clad resin. As a result, it is possible to maintain a low temperature dependence of the difference in refractive index between the core resin and the clad resin.

Still further, by substituting a fluorine-containing mono-, bi-, or poly-functional monomer included in resin compositions for core resin and clad resin and having the non-perfluoroadamantane structure with a fluorine-containing bi- or poly-functional monomer having the perfluoroadamantane structure, like the third fluorine-containing monomer, it is possible to significantly increase Tg of both of the resins and thus decrease the temperature dependence of the refractive index. As a result, it is possible to maintain a low temperature dependence of the difference in refractive index between the core resin and the clad resin.

A producing method of a cured resin product containing, as constituent components, the third fluorine-containing monomer and a fluorine-containing monomer other than the third fluorine-containing monomer is not particularly limited. For example, such a cured resin product can be produced by a method of preparing a mixture solution of the third fluorine-containing monomer and the fluorine-containing monomer other than the third fluorine-containing monomer and subjecting the mixture solution to polymerization, or the like method.

In terms of heat resistance, the amount of the fluorine-containing monofunctional monomer contained in the fluorine-containing monomer other than the third fluorine-containing monomer is preferably not more than 70 % by weight, more preferably not more than 60 % by weight. On the other hand, the sum of the amount of fluorine-containing bifunctional monomer contained in the third fluorine-containing monomer and the amount of fluorine-containing bifunctional monomer contained in the fluorine-containing monomer other than the third fluorine-containing monomer is preferably not less than 30 % by weight, more preferably not less than 40 % by weight.

In one embodiment, an optical waveguide of the present invention may include cured resin products each obtained by polymerization of resin compositions, each of the resin compositions containing, as constituent components, (i) a fourth fluorine-containing monomer containing the perfluoroadamantane structure and one functional group represented by General Formula (1), and (ii) the second fluorine-containing monomers.

Examples of the fourth fluorine-containing monomer include: perfluoro-1-adamantyl(meth)acrylate, perfluoro-1-adamantyl 2-fluoroacrylate, perfluoro-1-adamantyl 2-(trifluoromethyl)acrylate, (perfluoro-1-adamantyl)methyl(meth)acrylate, (perfluoro-1-adamantyl)2-fluoroacrylate, (perfluoro-1-adamantyl)2-(trifluoro)acrylate, 2-(perfluoro-1-adamantyl)ethyl(meth)acrylate, 2-(perfluoro-1-adamantyl)ethyl 2-fluoroacrylate, 2-(perfluoro-1-adamantyl)ethyl 2-(trifluoro)acrylate, 2-(perfluoro-1-adamantyloxy)ethyl(meth)acrylate, 2-(perfluoro-1-adamantyloxy)ethyl 2-fluoroacrylate, 2-(perfluoro-1-adamantyloxy)ethyl 2-(trifluoro)acrylate, 2-[2-(perfluoro-1-adamantyloxy)ethoxy]ethyl(meth)acrylate, 2-[2-(perfluoro-1-adamantyloxy)ethoxy]ethyl 2-fluoroacrylate, 2-[2-(perfluoro-1-adamantyloxy)ethoxy]ethyl 2-(trifluoro)acrylate, 2-(perfluoro-1-adamantyl)-2,2-difluoroethyl(meth)acrylate, 2-(perfluoro-1-adamantyl)-2,2-difluoroethylethyl 2-fluoroacrylate, and 2-(perfluoro-1-adamantyl)-2,2-difluoroethylethyl 2-(trifluoro)acrylate.

A method for producing the cured resin product is not particularly limited. For example, the cured resin product can be produced by a method of preparing a mixture solution of the fourth fluorine-containing monomer and the second fluorine-containing monomers and subjecting the mixture solution to polymerization, or the like method.

At least one kind of the second fluorine-containing monomers may be the third fluorine-containing monomer having the perfluoroadamantane structure.

Thus, all the second fluorine-containing monomers may have the perfluoroadamantane structure. In other words, all the second fluorine-containing monomers may be the third fluorine-containing monomers.

In one embodiment, an optical waveguide of the present invention may include cured resin products each

obtained by polymerization of resin compositions, each of the resin compositions containing, as constituent components, the polymer and the second fluorine-containing monomer, wherein the polymer is obtained by polymerization of: (i) a fourth fluorine-containing monomer containing the perfluoroadamantane structure and one functional group represented by General Formula (1); and (ii) a fifth fluorine-containing monomer that is a fluorine-containing monomer other than the fourth fluorine-containing monomer and contains one functional group represented by General Formula (1).

That is, an optical waveguide according to the present embodiment includes cured resin products each obtained by polymerization of resin compositions, each of the resin compositions containing, as constituent components, (i) the polymer obtained by polymerization of the fourth fluorine-containing monomer and the fifth fluorine-containing monomer (hereinafter such a polymer is referred to as "present polymer") and (ii) the second fluorine-containing monomers.

The present polymer can be synthesized by a known method, for example, a thermal polymerization method or a photo-polymerization method in a solvent. The molecular weight of the polymer is preferably in the range of not more than 50,000, more preferably not more than 40,000. A molecular weight exceeding 50,000 is not preferable since it causes the problem in solubility in or compatibility with a bivalent or higher fluorine-containing monomer.

The second fluorine-containing monomers may be a monomer obtained by combination of the third fluorine-containing monomer and the fluorine-containing monomer other than the third fluorine-containing monomer.

Examples of the fifth fluorine-containing monomer include: perfluoroethylmethyl(meth)acrylate, perfluoropropylmethyl(meth)acrylate, perfluorobutylmethyl(meth)acrylate, perfluoropentylethyl(meth)acrylate, perfluorohexylethyl (meth)acrylate, perfluorooctylethyl(meth)acrylate, and perfluorocyclohexylmethyl(meth)acrylate.

The cured resin product can be produced by a method of preparing a mixture solution of the present polymer and the second fluorine-containing monomers and subjecting to the mixture solution to polymerization.

Further, in one embodiment, an optical waveguide of the present invention may be such that the polymer is obtained by polymerization of the fourth fluorine-containing monomer and the fifth fluorine-containing monomer, and at least one kind of the second fluorine-containing monomers is the third fluorine-containing monomer having the perfluoroadamantane structure.

That is, an optical waveguide according to the present embodiment is cured resin products each obtained by polymerization of resin compositions, each of the resin compositions containing, as constituent components, the present polymer and the second fluorine-containing monomers, wherein at least one kind of the second fluorine-containing monomers is the third fluorine-containing monomer. Therefore, all the second fluorine-containing monomers may have the perfluoroadamantane structure. In other words, all the second fluorine-containing monomers may be the third fluorine-containing monomers.

In the above optical waveguide including cured resin products each containing, as a constituent component, a fluorine-containing monofunctional monomer having the perfluoroadamantane structure, a fluorine-containing bi- or poly-functional monomer contained in the resin composition for core resin and having the non-perfluoroadamantane structure can be substituted with a fluorine-containing monofunctional monomer having the perfluoroadamantane structure. This makes it possible to increase the temperature dependence of a refractive index of the core resin. As a result, it is possible to maintain a low temperature dependence of the difference in refractive index between the core resin and the clad resin.

Further, in the optical waveguide including cured resin products each obtained by resin compositions, each resin compositions containing, as a constituent component, a fluorine-containing monofunctional monomer having the perfluoroadamantane structure, a fluorine-containing bi- or poly-functional monomer included in the core resin and the clad resin and having the non-perfluoroadamantane structure is substituted with a fluorine-containing monofunctional monomer having the perfluoroadamantane structure in such a manner that the amount of substitution in the resin composition for core resin is larger than the amount of substitution in the resin composition for clad resin, so that the temperature dependence of a refractive index of the core resin can be increased. As a result, it is possible to maintain a low temperature dependence of the difference in refractive index between the core resin and the clad resin.

A large amount of polymer added causes decrease in crosslinking density of resin. In view of this, the weight ratio of the polymer to the resin composition is preferably in the range of not more than 70 % by weight, more preferably not more than 60 % by weight. On the other hand, the amount of the second fluorine-containing monomers added is preferably not less than 30 % by weight, more preferably not less than 40 % by weight.

The present invention is not limited to the aforementioned arrangements and is susceptible of various changes within the scope of the accompanying claims. Also, an embodiment obtained by suitable combinations of technical means disclosed in the different embodiments are also included within the technical scope of the present invention.

[Examples]

The following will describe details of the present invention with reference to Examples and drawing. However, the present invention is not limited to the descriptions of Examples. The present invention may be varied, altered, and modified by a person skilled in the art within the scope of the present invention. A refractive index measuring method,

an optical waveguide producing process, and a light loss measuring method will be described below.

<Refractive Index Measuring Method>

A resin composition containing monomers was injected between two glass plates (thickness: 0.7 mm, size: 2 cm × 2 cm) that were held with a gap of 20 ± 1 μm, with spacer tapes inserted therebetween. Then, the resin composition was irradiated with ultraviolet rays by using a high-pressure mercury lamp until the dose of ultraviolet-ray irradiation on the glass surface reached 3,000 mJ/cm$^2$. Thereafter, one of the glass plates was removed to obtain a sample for measurement.

The measurements of the refractive indices were carried out at 1550 nm through a prism coupling method by using a prism coupler (manufactured by Metricon Corporation) to obtain measurement values at 23 °C and 85 °C. As to the measurement values, four significant figures under the decimal point were recorded.

Differences (%) in refractive index between a core resin and a clad resin were calculated by using the refractive indices of the core resin and clad resin at 23 °C and 85 °C on the basis of the following Equation 3:

Difference (%) in refractive index = (refractive index of core^2 − refractive index of clad^2)/2/(refractive index of core^2) × 100 ...(3)

<Optical Waveguide Producing Process and Light Loss Measuring method>

The clad resin was applied to a glass substrate and then photo-cured (dose of ultraviolet-ray irradiation = 3,000 mJ/cm$^2$) with a convex stamper (metal mold: convexity dimension = 5 μm × 5 μm × 10 mm) pressed thereon, so that a lower clad portion having a concave portion corresponding to the core portion was formed.

After the stamper was released, the core resin was injected into the concave portion and then photo-cured (dose of ultraviolet-ray irradiation = 3,000 mJ/cm$^2$) with a flat stamper pressed thereon so that the core portion was formed.

Further, the clad resin was applied thereto and then photo-cured (dose of ultraviolet-ray irradiation = 3,000 mJ/cm$^2$) with a glass substrate pressed thereon so that an upper clad portion was formed. Light loss of the optical waveguide thus produced was measured in the waveband of 1550 nm by using a light loss measurement device (manufactured by Agilent Technologies, Inc.). Compositions of the clad resin and the core resin used will be described later.

<Monomers>

Table 1 shows the names of monomer compounds used in Examples and Comparative Examples, refractive indices thereof in liquid (589 nm), and forms thereof. Note that Lucirin® TPO is a photo-polymerization initiator. Of monomers 1 through 6, the monomers, except for dimethylol tricyclo[5.2.1.0$^{2,6}$]decane diacrylate used in Comparative Examples, are fluorine-containing monomers.

[Table 1]

| | Names of Compounds | Forms |
|---|---|---|
| ① | perfluorocyclohexylmethyl(meth)acrylate. | Liquid |
| ② | perfluoro-octamethylene-1,8-bis(acryloyloxymethyl) | Liquid |
| ③ | dimethylol tricyclo[5.2.1.0$^{2,6}$]decane diacrylate | Liquid |
| ④ | perfluoro-1,3-adamantanediol dimethacrylate | Solid |
| ⑤ | perfluoro-1,3-(bisacryloyloxyethoxy)adamantane | Liquid |
| ⑥ | erfluoro-1-adamantylacrylate | Liquid |
| ⑦ | polymer of perfluoro-1-adamantylacrylate | Solid |
| ⑧ | polymer of perfluoro-1-adamantylacrylate and perfluoroethylmethylacrylate (8:2) | Solid |
| ⑨ | Lucirin® TPO(manufactured by BASF) | Solid |

(continued)

| | Names of Compounds | Forms |
|---|---|---|
| ⑩ | di-t-butylperoxide | Solid |

[Example 1]

55 % by weight of perfluorocyclohexylmethylacrylate, 32.5 % by weight of perfluorooctamethylene-1,8-bis (acryloyloxymethyl), and 12.5 % by weight of perfluoro-1,3-adamantanediol dimethacrylate were mixed, 1 % by weight of Lucirin® TPO was added to 100 % by weight of the mixture, and the resulting mixture was then photo-cured to obtain a cured resin product used for clad resin.

Meanwhile, 20 % by weight of perfluorocyclohexylmethylacrylate and 80 % by weight of perfluoro-octamethylene-1,8-bis(acryloyloxymethyl) were mixed, 1 % by weight of Lucirin® TPO was added to 100 % by weight of the mixture, and the resulting mixture was then photo-cured to obtain a cured resin product used for core resin.

The operating temperatures of the optical waveguide generally range from -40 °C to 85 °C. In order to allow the optical waveguide to exhibit excellent optical properties in the above operating temperatures, a refractive index of the core resin needs to be higher by approximately 0.3 % to 0.4 % than that of the clad resin, maintaining an accuracy within ± 0.02 %.

In the present example, other bi- or poly-functional (meth)acrylate contained in the clad resin is substituted with bi- or poly-functional (meth)acrylate having the perfluoroadamantane structure. This decreases the temperature dependence of the refractive index of the clad resin. As a result, the temperature dependence of the difference in refractive index is decreased.

Table 2 shows compositions and physical properties of the clad resins and the core resins. Encircled number 1 through 9 in Table 2 correspond to encircled number 1 through 9 in Table 1, respectively. As shown in Table 2, differences (%) in refractive index at 23 °C and 85 °C were 0.37 and 0.39 in the present example, respectively. That is, it was found that even when a temperature was risen from room temperature to 85 °C, which is upper limit of the operating temperatures, the refractive index of the core resin was higher by approximately 0.3 to 0.4 % than that of the clad resin, maintaining an accuracy within ± 0.02 %.

It is known that linear expansion coefficient has characteristics that a low gain is obtained at low temperatures whereas a high gain is obtained at high temperatures. 85 °C, which is upper limit of the operating temperatures, is a temperature at which a significant change in linear expansion coefficient occurs. In spite of this, the optical waveguide can accurately maintain the difference in refractive index even at 85 °C, and such an optical waveguide can be said to have excellent properties.

Light losses of the core resin, which is a propagation path of light, were measured. In the present example, both of the light losses at 23 °C and 85 °C were low, as shown in Table 2. Thus, it was found that an optical waveguide of the present example had a low temperature dependence of the difference in refractive index between the core resin and the clad resin, had a low temperature dependence of optical properties, and exhibited excellent optical properties in its operating temperatures.

[Table 2]

| | Comparative Example 1 | | Comparative Example 2 | | Example 1 | | Example 2 | | Example 3 | | Example 4 | | Example 5 | | Example 6 | | Example 7 | | Example 8 | | Example 9 | |
|---|---|---|---|---|---|---|---|---|---|---|---|---|---|---|---|---|---|---|---|---|---|---|
| | Clad | Core | Clad | Core | Clad | Core | Clad | Core | Clad | Core | Clad | Core | Clad | Core | Clad | Core | Clad | Core | Clad | Core | Clad | Core |
| ① | | | 41.5 | 20 | 55 | 20 | 55 | 20 | 55 | 20 | 42 | 21.5 | 32 | 11.5 | 32 | 10 | 42 | 21.5 | 42 | 23 | 32 | 10 |
| ② | 30 | 25.9 | 58.5 | 80 | 32.5 | 80 | 33.5 | 80 | 27.5 | 75 | 58 | 51.5 | 58 | 51.5 | 48 | 70 | 58 | 51.5 | 58 | 53 | 48 | 70 |
| ③ | 70 | 74.1 | | | | | | | | | | | | | | | | | | | | |
| ④ | | | | | 12.5 | | | | 17.5 | 5 | | | | | 20 | 20 | | | | | 20 | 20 |
| ⑤ | | | | | | | 11.5 | | | | | 27 | 10 | 37 | | | | | | | | |
| ⑥ | | | | | | | | | | | | | | | | | | 27 | | | | |
| ⑦ | | | | | | | | | | | | | | | | | | | | 24 | | |
| ⑧ | 1 | 1 | 1 | 1 | 1 | 1 | 1 | 1 | 1 | 1 | 1 | 1 | 1 | 1 | 1 | 1 | 1 | 1 | 1 | 1 | | |
| ⑨ | | | | | | | | | | | | | | | | | | | | | 1 | 1 |
| Refractive Index (1550nm) | 1.4756 | 1.4810 | 1.3727 | 1.3778 | 1.3727 | 1.3778 | 1.3728 | 1.3778 | 1.3740 | 1.3790 | 1.3726 | 1.3778 | 1.3801 | 1.3853 | 1.3800 | 1.3852 | 1.3726 | 1.3778 | 1.3726 | 1.3777 | 1.3795 | 1.3847 |
| Difference (%) In Refractive Index @23°C | - | 0.37 | - | 0.37 | - | 0.37 | - | 0.37 | - | 0.37 | - | 0.37 | - | 0.37 | - | 0.37 | - | 0.37 | - | 0.37 | - | 0.37 |
| Difference (%) In Refractive Index @85°C | - | 0.37 | - | 0.45 | - | 0.39 | - | 0.39 | - | 0.38 | - | 0.39 | - | 0.38 | - | 0.38 | - | 0.39 | - | 0.39 | - | 0.38 |
| Light Loss (dB/cm) @1550nm (23°C) | - | 0.71 | - | 0.37 | - | 0.37 | - | 0.37 | - | 0.36 | - | 0.26 | - | 0.24 | - | 0.35 | - | 0.26 | - | 0.26 | - | 0.35 |
| Light Loss (dB/cm) @1550nm (85°C) | - | 0.72 | - | 3.20 | - | 0.47 | - | 0.48 | - | 0.43 | - | 0.42 | - | 0.32 | - | 0.38 | - | 0.42 | - | 0.42 | - | 0.38 |

[Example 2]

55 % by weight of perfluorocyclohexylmethylacrylate, 33.5 % by weight of perfluorooctamethylene-1,8-bis (acryloyloxymethyl), and 11.5 % by weight of perfluoro-1,3-bis(acryloyloxyethoxy)adamantane were mixed, 1 % by weight of Lucirin® TPO was added to 100 % by weight of the mixture, and the resulting mixture was then photo-cured to obtain a cured resin product used for clad resin.
Meanwhile, 20 % by weight of perfluorocyclohexylmethylacrylate and 80 % by weight of perfluorooctamethylene-1,8-bis(acryloyloxymethyl) were mixed, 1 % by weight of Lucirin® TPO was added to 100 % by weight of the mixture, and the resulting mixture was then photo-cured to obtain a cured resin product used for core resin.
In the present example, bi- or poly-functional (meth)acrylate contained in the clad resin and having the non-perfluoroadamantane structure is substituted with bi- or poly-functional (meth)acrylate having the perfluoroadamantane structure. This decreases the temperature dependence of the refractive index of the clad resin. As a result, the temperature dependence of the difference in refractive index is decreased.
As shown in Table 2, differences (%) in refractive index at 23 °C and 85 °C were 0.37 and 0.39 in the present example, respectively. That is, it was found that even when a temperature was risen from room temperature to 85 °C, which is upper limit of the operating temperatures, the refractive index of the core resin was higher by approximately 0.3 to 0.4 % than that of the clad resin, maintaining an accuracy within ± 0.02 %.
Further, as shown in Table 2, both of the light losses at 23 °C and 85 °C were low. Thus, it was found that an optical waveguide of the present example had a low temperature dependence of the difference in refractive index between the core resin and the clad resin, had a low temperature dependence of optical properties, and exhibited excellent optical properties in its operating temperatures.

[Example 3]

55 % by weight of perfluorocyclohexylmethylacrylate, 27.5 % by weight of perfluorooctamethylene-1,8-bis (acryloyloxymethyl), and 17.5 % by weight of perfluoro-1,3-adamantanediol dimethacrylate were mixed, 1 % by weight of Lucirin® TPO was added to 100 % by weight of the mixture, and the resulting mixture was then photo-cured to obtain a cured resin product used for clad resin.
Meanwhile, 20 % by weight of perfluorocyclohexylmethylacrylate, 75 % by weight of perfluorooctamethylene-1,8-bis(acryloyloxymethyl), and 5 % by weight of perfluoro-1,3-adamantanediol dimethacrylate were mixed, 1 % by weight of Lucirin® TPO was added to 100 % by weight of the mixture, and the resulting mixture was then photo-cured to obtain a cured resin product used for core resin.
In the present example, other bi- or poly-functional (meth)acrylate contained in the core resin and the clad resin is substituted with bi- or poly-functional (meth)acrylate having the perfluoroadamantane structure in such a manner that the amount of substitution in the clad resin is larger than the amount of substitution in the core resin. This decreases the temperature dependence of the refractive index of the clad resin. As a result, the temperature dependence of the difference in refractive index is decreased.
As shown in Table 2, differences (%) in refractive index at 23 °C and 85 °C were 0.37 and 0.38 in the present example, respectively. That is, it was found that even when a temperature was risen from room temperature to 85 °C, which is upper limit of the operating temperatures, the refractive index of the core resin was higher by approximately 0.3 to 0.4 % than that of the clad resin, maintaining an accuracy within ± 0.02 %.
Further, as shown in Table 2, both of the light losses at 23 °C and 85 °C were low. Thus, it was found that an optical waveguide of the present example had a low temperature dependence of the difference in refractive index between the core resin and the clad resin, had a low temperature dependence of optical properties, and exhibited excellent optical properties in its operating temperatures.

[Example 4]

42 % by weight of perfluorocyclohexylmethylacrylate and 58 % by weight of perfluorooctamethylene-1,8-bis (acryloyloxymethyl) were mixed, 1 % by weight of Lucirin® TPO was added to 100 % by weight of the mixture, and the resulting mixture was then photo-cured to obtain a cured resin product used for clad resin.
Meanwhile, 21.5 % by weight of perfluorocyclohexylmethylacrylate, 51.5 % by weight of perfluorooctamethylene-1,8-bis(acryloyloxymethyl), and 27 % by weight of perfluoro-1-adamantylacrylate were mixed, 1 % by weight of Lucirin® TPO was added to 100 % by weight of the mixture, and the resulting mixture was then photo-cured to obtain a cured resin product used for core resin.
In the present example, other bi- or poly-functional (meth)acrylate contained in the core resin is substituted with monofunctional (meth)acrylate having the perfluoroadamantane structure. This increases the temperature dependence of the refractive index of the core resin. As a result, the temperature dependence of the difference in refractive

index is decreased.

As shown in Table 2, differences (%) in refractive index at 23 °C and 85 °C were 0.37 and 0.39 in the present example, respectively. That is, it was found that even when a temperature was risen from room temperature to 85 °C, which is upper limit of the operating temperatures, the refractive index of the core resin was higher by approximately 0.3 to 0.4 % than that of the clad resin, maintaining an accuracy within ± 0.02 %.

Further, as shown in Table 2, both of the light losses at 23 °C and 85 °C were low. Thus, it was found that an optical waveguide of the present example had a low temperature dependence of the difference in refractive index between the core resin and the clad resin, had a low temperature dependence of optical properties, and exhibited excellent optical properties in its operating temperatures.

[Example 5]

32 % by weight of perfluorocyclohexylmethylacrylate, 58 % by weight of perfluorooctamethylene-1,8-bis(acryloyloxymethyl), and 10 % by weight of perfluoro-1-adamantylacrylate were mixed, 1 % by weight of Lucirin® TPO was added to 100 % by weight of the mixture, and the resulting mixture was then photo-cured to obtain a cured resin product used for clad resin.

Meanwhile, 11.5 % by weight of perfluorocyclohexylmethylacrylate, 51.5 % by weight of perfluoro-octamethylene-1,8-bis(acryloyloxymethyl), and 37 % by weight of perfluoro-1-adamantylacrylate were mixed, 1 % by weight of Lucirin® TPO was added to 100 % by weight of the mixture, and the resulting mixture was then photo-cured to obtain a cured resin product used for core resin.

In the present example, other bi- or poly-functional (meth)acrylate contained in the core resin and the clad resin is substituted with monofunctional (meth)acrylate having the perfluoroadamantane structure in such a manner that the amount of substitution in the core resin is larger than the amount of substitution in the clad resin. This increases the temperature dependence of the refractive index of the core resin.

As shown in Table 2, differences (%) in refractive index at 23 °C and 85 °C were 0.37 and 0.38 in the present example, respectively. That is, it was found that even when a temperature was risen from room temperature to 85 °C, which is upper limit of the operating temperatures, the refractive index of the core resin was higher by approximately 0.3 to 0.4 % than that of the clad resin, maintaining an accuracy within ± 0.02 %.

Further, as shown in Table 2, both of the light losses at 23 °C and 85 °C were low. Thus, it was found that an optical waveguide of the present example had a low temperature dependence of the difference in refractive index between the core resin and the clad resin, had a low temperature dependence of optical properties, and exhibited excellent optical properties in its operating temperatures.

[Example 6]

32 % by weight of perfluorocyclohexylmethylacrylate, 48 % by weight of perfluorooctamethylene-1,8-bis(acryloyloxymethyl), and 20 % by weight of perfluoro-1,3-adamantanediol dimethacrylate were mixed, 1 % by weight of Lucirin® TPO was added to 100 % by weight of the mixture, and the resulting mixture was then photo-cured to obtain a cured resin product used for clad resin.

Meanwhile, 10 % by weight of perfluorocyclohexylmethylacrylate, 70 % by weight of perfluorooctamethylene-1,8-bis(acryloyloxymethyl), and 20 % by weight of perfluoro-1,3-adamantanediol dimethacrylate were mixed, 1 % by weight of Lucirin® TPO was added to 100 % by weight of the mixture, and the resulting mixture was then photo-cured to obtain a cured resin product used for core resin.

In the present example, other mono-, bi-, or poly-functional (meth)acrylate contained in the core resin and the clad resin is substituted with bi- or poly-functional (meth)acrylate having the perfluoroadamantane structure. This significantly increases Tg of both of the resins and decreases the temperature dependence of the refractive indices. As a result, the temperature dependence of the difference in refractive index is decreased.

As shown in Table 2, differences (%) in refractive index at 23 °C and 85 °C were 0.37 and 0.38 in the present example, respectively. That is, it was found that even when a temperature was risen from room temperature to 85 °C, which is upper limit of the operating temperatures, the refractive index of the core resin was higher by approximately 0.3 to 0.4 % than that of the clad resin, maintaining an accuracy within ± 0.02 %.

Further, as shown in Table 2, both of the light losses at 23 °C and 85 °C were low. Thus, it was found that an optical waveguide of the present example had a low temperature dependence of the difference in refractive index between the core resin and the clad resin, had a low temperature dependence of optical properties, and exhibited excellent optical properties in its operating temperatures.

[Example 7]

A polymer (I) was synthesized by a known thermal polymerization method in a solvent in the following manner. That is, perfluoro-1-adamantylacrylate was mixed into perfluoro-1,3-dimethylcyclohexane as a solvent in the presence of $\alpha,\alpha'$-azobis(isobutyronitril) as a polymerization catalyst. Into the polymer solution thus obtained, methanol was mixed to precipitate a polymer. Then, the polymer thus precipitated was washed and dried to obtain a white powdery polymer. The number average molecular weight of the polymer measured by gel permeation chromatography method (GPC method) was 20,000.

42 % by weight of perfluorocyclohexylmethylacrylate and 58 % by weight of perfluorooctamethylene-1,8-bis (acryloyloxymethyl) were mixed, 1 % by weight of Lucirin® TPO was added to 100 % by weight of the mixture, and the resulting mixture was then photo-cured to obtain a cured resin product used for clad resin.

Meanwhile, 21.5 % by weight of perfluorocyclohexylmethylacrylate, 51.5 % by weight of perfluorooctamethylene-1,8-bis(acryloyloxymethyl), and 27 % by weight of the polymer (I) were mixed, 1 % by weight of Lucirin® TPO was added to 100 % by weight of the mixture, and the resulting mixture was then photo-cured to obtain a cured resin product used for core resin.

In the present example, other bi- or poly-functional (meth)acrylate contained in the core resin is substituted with monofunctional (meth)acrylate having the perfluoroadamantane structure. This increases the temperature dependence of the refractive index of the core resin. As a result, the temperature dependence of the difference in refractive index is decreased.

As shown in Table 2, differences (%) in refractive index at 23 °C and 85 °C were 0.37 and 0.39 in the present example, respectively. That is, it was found that even when a temperature was risen from room temperature to 85 °C, which is upper limit of the operating temperatures, the refractive index of the core resin was higher by approximately 0.3 to 0.4 % than that of the clad resin, maintaining an accuracy within ± 0.02 %.

Further, as shown in Table 2, both of the light losses at 23 °C and 85 °C were low. Thus, it was found that an optical waveguide of the present example had a low temperature dependence of the difference in refractive index between the core resin and the clad resin, had a low temperature dependence of optical properties, and exhibited excellent optical properties in its operating temperatures.

[Example 8]

A polymer (II) was synthesized by a known thermal polymerization method in a solvent in the following manner. That is, a mixture of 80 % by weight of perfluoro-1-adamantylacrylate and 20 % by weight perfluoromethylethylacrylate was mixed into perfluoro-1,3-dimethylcyclohexane as a solvent in the presence of $\alpha,\alpha'$-azobis(isobutyronitril) as a polymerization catalyst. Into the polymer solution thus obtained, methanol was mixed to precipitate a polymer. Then, the polymer thus precipitated was washed and dried to obtain a white powdery polymer. The number average molecular weight of the polymer measured by gel permeation chromatography method (GPC method) was 25,000.

42 % by weight of perfluorocyclohexylmethylacrylate and 58 % by weight of perfluorooctamethylene-1,8-bis (acryloyloxymethyl) were mixed, 1 % by weight of Lucirin® TPO was added to 100 % by weight of the mixture, and the resulting mixture was then photo-cured to obtain a cured resin product used for clad resin.

Meanwhile, 23 % by weight of perfluorocyclohexylmethylacrylate, 53 % by weight of perfluorooctamethylene-1,8-bis(acryloyloxymethyl), and 24 % by weight of the polymer (II) were mixed, 1 % by weight of Lucirin® TPO was added to 100 % by weight of the mixture, and the resulting mixture was then photo-cured to obtain a cured resin product used for core resin.

In the present example, other bi- or poly-functional (meth)acrylate contained in the core resin is substituted with monofunctional (meth)acrylate having the perfluoroadamantane structure. This increases the temperature dependence of the refractive index of the core resin. As a result, the temperature dependence of the difference in refractive index is decreased.

As shown in Table 2, differences (%) in refractive index at 23 °C and 85 °C were 0.37 and 0.39 in the present example, respectively. That is, it was found that even when a temperature was risen from room temperature to 85 °C, which is upper limit of the operating temperatures, the refractive index of the core resin was higher by approximately 0.3 to 0.4 % than that of the clad resin, maintaining an accuracy within ± 0.02 %.

Further, as shown in Table 2, both of the light losses at 23 °C and 85 °C were low. Thus, it was found that an optical waveguide of the present example had a low temperature dependence of the difference in refractive index between the core resin and the clad resin, had a low temperature dependence of optical properties, and exhibited excellent optical properties in its operating temperatures.

[Example 9]

The same components with the same amounts as those of Example 5 were mixed, except that Lucirin® TPO was replaced by di-t-butylperoxide, and the resulting mixture was cured at 160 °C for 1 hour in a circulating heater rather than photo-cured, so that cured resin products used for core resin and clad resin were obtained.
As shown in Table 2, differences (%) in refractive index at 23 °C and 85 °C were 0.37 and 0.38 in the present example, respectively. That is, it was found that even when a temperature was risen from room temperature to 85 °C, which is upper limit of the operating temperatures, the refractive index of the core resin was higher by approximately 0.3 to 0.4 % than that of the clad resin, maintaining an accuracy within ± 0.02 %.
Further, as shown in Table 2, both of the light losses at 23 °C and 85 °C were low. Thus, it was found that an optical waveguide of the present example had a low temperature dependence of the difference in refractive index between the core resin and the clad resin, had a low temperature dependence of optical properties, and exhibited excellent optical properties in its operating temperatures.

[Comparative Example 1]

30 % by weight of perfluorooctamethylene-1,8-bis(acryloyloxymethyl) and 70 % by weight of dimethylol tricyclo [5.2.1.0$^{2,6}$]decane diacrylate were mixed and mixed, 1 % by weight of Lucirin® TPO was added to 100 % by weight of the mixture, and the resulting mixture was then photo-cured to obtain a cured resin product used for clad resin.
Meanwhile, 25.9 % by weight of perfluorooctamethylene-1,8-bis(acryloyloxymethyl) and 74.1 % by weight of dimethylol tricyclo[5.2.1.0$^{2,6}$]decane diacrylate were mixed, 1 % by weight of Lucirin® TPO was added to 100 % by weight of the mixture, and the resulting mixture was then photo-cured to obtain a cured resin product used for core resin.
As shown in Table 2, both of the differences (%) in refractive index at 23 °C and 85 °C in Comparative Example 1 were 0.37, and the temperature dependences of the differences in refractive index were excellent. However, light losses at 23 °C and 85 °C were 0.71 and 0.72, respectively, which are higher than the values obtained in Examples and shows that light losses in Comparative Example 1 are much larger than those in Examples. That is, it was found that optical waveguide produced in Comparative Example 1 without the fluorine-containing monomer having the perfluoroadamantane structure does not achieve the object of the present invention, i.e. the object that both the temperature dependence of the difference in refractive index and optical properties are maintained in excellent state, and have insufficient properties.

[Comparative Example 2]

41.5 % by weight of perfluorocyclohexylmethylacrylate and 58.5 % by weight of perfluorooctamethylene-1,8-bis(acryloyloxymethyl) were mixed, 1 % by weight of Lucirin® TPO was added to 100 % by weight of the mixture, and the resulting mixture was then photo-cured to obtain a cured resin product used for clad resin.
Meanwhile, 20 % by weight of perfluorocyclohexylmethylacrylate and 80 % by weight of perfluorooctamethylene-1,8-bis(acryloyloxymethyl) were mixed, 1 % by weight of Lucirin® TPO was added to 100 % by weight of the mixture, and the resulting mixture was then photo-cured to obtain a cured resin product used for core resin.
As shown in Table 2, the difference in refractive index at 85 °C in Comparative Example 2 exceeded 0.4 %, which shows that temperature dependences of the difference in refractive index was high. In addition, light loss at 23 °C was 0.37, which was almost the same as the values obtained in Examples. However, light loss at 85 °C was 3.20, which was extremely high. That is, it was found that optical waveguide produced in Comparative Example 2 without the fluorine-containing monomer having the perfluoroadamantane structure does not achieve the object of the present invention, i.e. the object that both the temperature dependence of the difference in refractive index and the optical properties are maintained excellently, and have insufficient properties.
Specific embodiments or examples implemented in the detailed descriptions of the present invention only show technical features of the present invention and are not intended to limit the scope of the invention. Variations can be effected within the spirit of the present invention and the scope of the following claims.

INDUSTRIAL APPLICABILITY

As described above, an optical waveguide of the present invention includes cured resin products each obtained by polymerization of resin compositions, each of the resin compositions containing, as constituent components, first fluorine-containing monomers each having a perfluoroadamantane structure. Therefore, the optical waveguide of the present invention can maintain both temperature dependence of the difference in refractive index and optical properties in excellent states. Thus, the present invention can be suitably used as a single-mode optical waveguide for high-speed high-capacity communications and the like optical waveguide, and the present invention is widely applicable to information

and communication industries including Internet and mobile phones.

## Claims

1. An optical waveguide comprising cured resin products each obtained by polymerization of resin compositions, each of the resin compositions containing, as constituent components, first fluorine-containing monomers each having a perfluoroadamantane structure.

2. The optical waveguide according to claim 1, wherein
the first fluorine-containing monomer has a functional group represented by the following General Formula (1):

$$-O_p-[(CR_1R_2)_q-CH_2-O_r]_s-COC(R_3)=CH_2 \qquad (1)$$

where: $R_1$ and $R_2$ are H or F and may be the same or different; $R_3$ is H, $CH_3$, F, or $CF_3$; p = 0 or 1; when p = 0, it is q = 0 to 5, r = 1, and s = 1; when p = 1, it is q = 0 or 1, r = 0 or 1, and s = 0 to 3; and an upper limit of $(q + 1) \times s$ is 6.

3. The optical waveguide according to claim 2, wherein
the first fluorine-containing monomer has one to three functional groups each represented by General Formula (1).

4. The optical waveguide according to claim 1, comprising cured resin products each obtained by polymerization of resin compositions, each of the resin compositions containing, as constituent components, (i) a polymer obtained by polymerization of the first fluorine-containing monomers and (ii) second fluorine-containing monomers each containing at least two functional groups each represented by General Formula (1).

5. The optical waveguide according to claim 4, wherein
at least one kind of the second fluorine-containing monomers is a third fluorine-containing monomer containing the perfluoroadamantane structure.

6. The optical waveguide according to claim 2, comprising cured resin products each obtained by polymerization of resin compositions, each of the resin compositions containing, as constituent components, (i) a third fluorine-containing monomer containing the perfluoroadamantane structure and at least two functional groups each represented by General Formula (1), and (ii) a fluorine-containing monomer other than the third fluorine-containing monomer.

7. The optical waveguide according to claim 2, comprising cured resin products each obtained by polymerization of resin compositions, each of the resin compositions containing, as constituent components, (i)a fourth fluorine-containing monomer containing the perfluoroadamantane structure and one functional group represented by General Formula (1), and (ii) the second fluorine-containing monomers.

8. The optical waveguide according to claim 7, wherein
at least one kind of the second fluorine-containing monomers is a third fluorine-containing monomer containing the perfluoroadamantane structure.

9. The optical waveguide according to claim 4, comprising cured resin products each obtained by polymerization of resin compositions, each of the resin compositions containing, as constituent components, a polymer and the second fluorine-containing monomer, wherein
the polymer is obtained by polymerization of: (i) a fourth fluorine-containing monomer containing the perfluoroadamantane structure and one functional group represented by General Formula (1); and (ii) a fifth fluorine-containing monomer that is a fluorine-containing monomer other than the fourth fluorine-containing monomer and contains one functional group represented by General Formula (1).

10. The optical waveguide according to claim 9, wherein
the second fluorine-containing monomers are the third fluorine-containing monomer and a fluorine-containing monomer other than the third fluorine-containing monomer.

11. The optical waveguide according to claim 4, wherein
the polymer is obtained by polymerization of the fourth fluorine-containing monomer and the fifth fluorine-containing monomer, and

at least one kind of the second fluorine-containing monomers is a third fluorine-containing monomer containing the perfluoroadamantane structure.

**12.** The optical waveguide according to claim 1, wherein the cured resin product is produced by a photo radical polymerization method and/or a thermal radical polymerization method.

FIG. 1

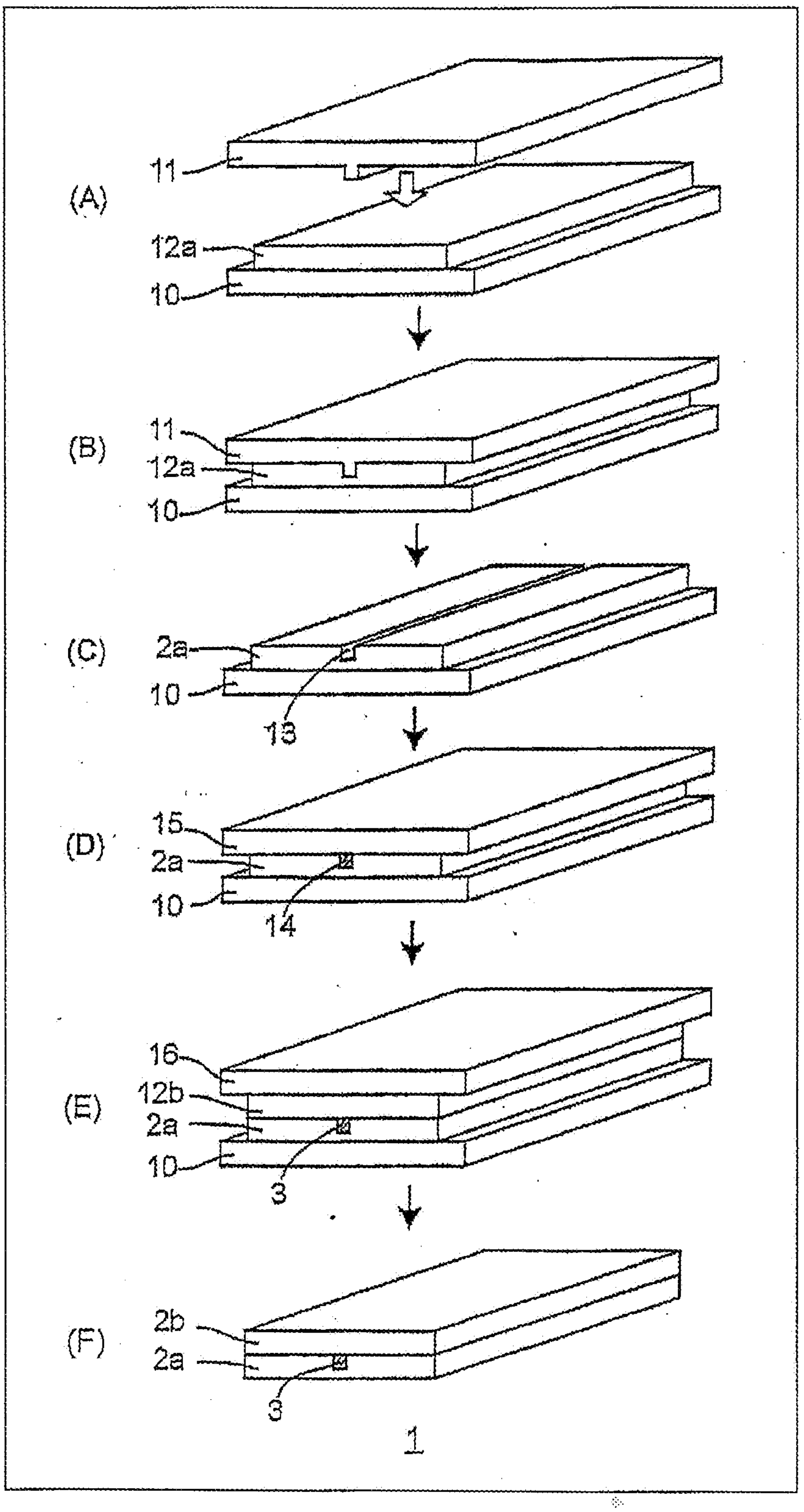
(A)
11
12a
10
(B)
11
12a
10
(C)
2a
10
13
(D)
15
2a
10
14
(E)
16
12b
2a
10
3
(F)
2b
2a
3
1

## INTERNATIONAL SEARCH REPORT

International application No.
PCT/JP2007/059154

A. CLASSIFICATION OF SUBJECT MATTER
*G02B6/12*(2006.01)i, *C08F220/24*(2006.01)i

According to International Patent Classification (IPC) or to both national classification and IPC

B. FIELDS SEARCHED

Minimum documentation searched (classification system followed by classification symbols)
G02B6/12, C08F220/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPI, CAplus(STN), REGISTRY(STN), JST7580(JDream2), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| X | WO 03/055841 A1 (Idemitsu Petrochemical Co., Ltd.),<br>10 July, 2003 (10.07.03),<br>Page 1, line 5 to page 14, line 30<br>& JP 2004123687 A & EP 1460057 A1<br>& KR 2004086253 A & TW 200301760 A<br>& US 7084295 B2 | 1-12 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 May, 2007 (16.05.07) | 24 July, 2007 (24.07.07) |
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004104059 A1
- JP 2000026540 A
- JP 2004123687 A